# EUROPEAN PATENT APPLICATION

(11) **EP 4 545 354 A1**
(43) Date of publication of application: **30.04.2025**
(21) Application number: 24208313.7
(22) Date of filing: 23.10.2024
(51) Int. Cl.: B60N 2/16, B60N 2/07

(54) **ADJUSTABLE TRUCK CHAIR ASSEMBLY**

(30) Priority: 24.10.2023 NL 2036106
(71) Applicant: DAF Trucks N.V., 5643 TW Eindhoven (NL)
(72) Inventor: ROIJACKERS, Arnoldus Johannes Ignatius Maria, 5643 TW Eindhoven (NL); PURDY, Stuart William, 5643 TW Eindhoven (NL)
(74) Representative: V.O.

(57) **Abstract**

Truck comprising an adjustable truck chair assembly comprising:
- a truck chair provided on a support frame, wherein the support frame is slideably connected to a pair of parallel sliding rails such that the support frame can slide over the sliding rails in a sliding direction, wherein the sliding rails extend in a plane at an angle relative to a cabin floor of the truck;
- a spiral spring at least partially provided below the plane defined by the sliding rails and connected to the support frame on one end and to the sliding rails on the other end such that the truck chair has a biased position on the sliding rails and at least partially counteracting a downward force acting on the truck chair,
- wherein the spiral spring is wound-up around an axis transverse to the plane and is arranged to be substantially unwound in the plane when the truck chair is moved out of the biased position on the sliding rails.

## Description

The invention relates to a truck comprising an adjustable truck chair assembly.

A truck chair is a type of seating specifically designed for use in trucks, in particular for in the cabin of the truck. It is designed to provide comfort and support for drivers and passengers during daily work, either while operating the vehicle or while being present as a passenger. Truck chairs are typically more rugged and durable compared to regular car seats due to the demanding nature of truck driving, which often involves working long hours behind the wheel.

Truck chairs come in various designs and features, including adjustable lumbar support, reclining mechanisms, armrests, headrests, and often have additional padding to absorb vibrations from the road. A very common feature is the possibility to adjust the truck chair in length. This is done using the chair's slide adjustment, which allows the person sitting on the truck chair to move the truck seat closer or farther away from the dashboard of the truck. In particular, this allows the driver of the truck to move the truck chair closer or farther away from the pedals and steering wheel, thereby accommodating drivers of different length.

The chair's slide adjustment may be provided on slanted rails, i.e. on rails that are provided under and angle relative to the cabin floor. This may be advantageous in situations in which the cabin floor itself is at an angle relative to the road, when the slanted rails can compensate for the angle of the cabin floor such that the slanted rails of the chair's slide adjustment is parallel to the road. Additionally, it may be advantageous to provide slanted rails regardless of the angle of the cabin floor. Doing so allows for height adjustment of the truck chair when moving the truck chair forward or backward on the sliding rails via the chair's slide adjustment. For example, in European "Cab Over Engine" truck designs it may be difficult to create a low cabin position due to the position of the front wheel of the truck relative to the truck chair.

A downside of providing the chair's slide adjustment on slanted rails is that the truck chair may move too fast in the downward direction of the slanted rails due to the gravity acting on the truck chair. For example, if the slanted rails are provided under an angle such that the truck chair moves downward when the truck chair is moved forward on the slide adjustment, it may be difficult for the person sitting on the truck chair to adjust the position of the truck chair due to its bias towards moving forward on the slide adjustment.

In order to compensate for this movement bias, various compensating mechanisms have been proposed. These compensating mechanisms are often bulky, introducing packaging problems, or may require expensive modifications to the truck chairs and / or truck cabin.

The invention aims to counteract the above disadvantages, preferably while retaining the advantages. More specifically, the invention aims to provide for a truck comprising an adjustable truck chair assembly, preferably with a slide adjustment having slanted rails and a compensating mechanism that can be provided without modifying standard truck chairs and causing packaging problems in the cabin of the truck.

To this end, the invention provides for a truck comprising an adjustable truck chair assembly, in particular the truck comprising the adjustable truck chair assembly according to claim 1. The adjustable truck chair assembly comprises a truck chair provided on a support frame. The truck chair may be a common truck chair that has a support frame, or is attached to a support frame. Such a support frame preferably at least has a structure suitable for durably mounting the chair to another component, such as the sliding frame. The support frame is slideably connected to a pair of parallel provided sliding rails such that the truck chair can slide in a sliding direction in a plane at an angle relative to the cabin floor. Preferably, both sliding rails can be provided on a side of the truck chair, thereby acting as a stable support for the truck chair. The adjustable truck chair assembly further comprises a spiral spring that is at least partially provided below the plane defined by the sliding rails and connected to the support frame on one end and to the sliding rails on the other end such that the truck chair has a biased position on the sliding rails and at least partially counteracting a downward force acting on the truck chair.

In the context of the invention, a biased position on the sliding rails should be understood as the position of the truck chair on the sliding rails if no external forces are applied to the truck chair. Any forces applied to the truck chair may move the truck chair to a different position on the sliding rails, the spiral spring then provides for a force on the truck chair in the direction of the biased position on the sliding rails.

The spiral spring can be a wound-up type of spiral spring, preferably spiral shaped in a single plane of the spiral spring. This may result in a spiral spring that is relatively flat, such that it may be provided at least partially in the space between the support frame and the cabin floor, allowing for a cost and space efficient way of providing for a compensating mechanism. As an example, an adjustable truck chair assembly is provided in which the truck chair is in its biased position on the sliding rails. A wound-up type of spiral spring is provided, said spiral spring connected on one end to the support frame and on the other end to the sliding rails. When the truck chair is now moved in the sliding direction by applying a force on the truck chair, the spiral spring unwinds. Unwinding causes deformation of the spring in a plane transverse to its height, but not in the height direction itself. In other words, the spiral spring stays relatively flat. When the truck chair moves back to its biased position on the sliding rails, the spiral spring winds up again and returns to its original shape.

The spiral spring can be provided between the pair of sliding rails. The plane wherein the pair of sliding rails extend defines a volume, in which the spiral spring is provided. Providing the spiral spring in said volume may result in a lower height of the seat, which provides an advantage in a European cab over engine design, where it can be advantageous that a driver is typically seated directly above the front wheels, as close as possible to the wheel assembly, which may leave very little packaging space for a compensation mechanism.

The truck chair assembly can further comprise a locking mechanism arranged to releasably lock the truck chair along the sliding direction, to allow a person sitting on the truck chair to adjust the position of the truck chair on the sliding rails. Once the truck chair is in a preferred position, the truck chair can be locked, or fixed, relative to the sliding rails. Preferably, the locking mechanism is self-locking, meaning that if a user does not engage the locking mechanism it locks the truck chair in position.

The adjustable truck chair assembly further comprises a lifting mechanism arranged to adjust the distance between the support frame and the cabin floor in a direction perpendicular to the cabin floor, wherein the lifting mechanism is provided below the surface defined by the support frame. The lifting mechanism may allow for the adjustment of the truck chair in height, without moving the truck chair in the sliding direction. Such a lifting mechanism is also provided below the surface of the support frame, and preferably in the volume below the surface of the support frame and between the sliding rails, both increasing the adjustability of the truck chair but also limiting the available space for a compensating mechanism such as the spiral spring.

The adjustable truck chair assembly can further comprise a seat suspension, preferably a central seat air bellow carrier, provided below the surface of the support frame, preferably in the volume below the surface of the support frame and between the sliding rails. The spiral spring is provided around the central seat air bellow carrier, providing a safety feature to the truck chair but also limiting the available space for a compensating mechanism such as the spiral spring.

Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1 shows a side view of a truck;
Figs. 2A and 2B show an adjustable truck chair assembly on two different positions on the sliding rails respectively;
Fig. 3 shows a bottom view of an adjustable truck chair assembly.

It is noted that the figures are only schematic representations that are given by way of non-limited examples. In the figures, the same or corresponding parts are designated with the same reference numerals.

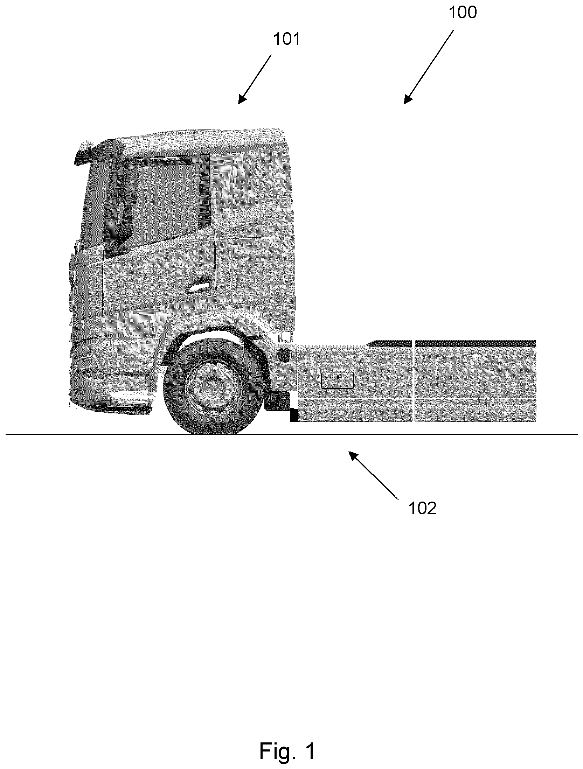

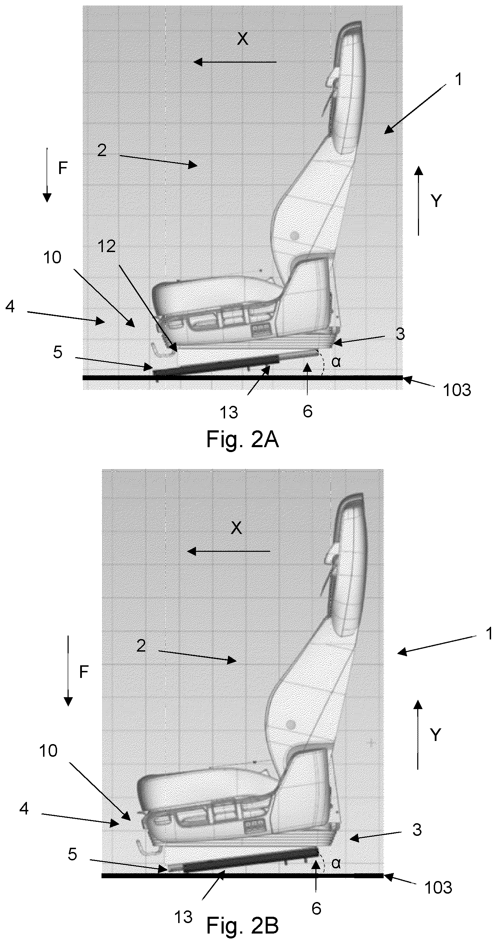

Turning to Fig. 1, a truck 100 has been depicted. The truck comprises a cabin 101 provided towards the front side of the truck 100 in which a driver can take place in order to drive the truck 100. In the shown example, the cabin floor 103 (see Figs. 2A and 2B) is provided parallel with the road 102 on which the truck 100 can drive.

In Figs. 2A and 2B an adjustable truck chair assembly 1 is depicted. In the example, the truck chair assembly 1 comprises a truck chair 2 is provided on a support frame 3. The support frame 4 is slideably connected to a pair of parallel provided sliding rails 5 such that the truck chair 2 can slide in the sliding direction X. Because the sliding rails 5 are mounted at an angle α to the cabin floor 103 of the truck 100, movement in the sliding direction X also causes the chair to move in a height direction Y, said height direction Y being perpendicular to the sliding direction. While in the shown example the cabin floor 103 is provided horizontal, it shall be clear that the cabin floor 103 itself can be provided at an angle, depending on the overall truck 100 design, and in particular truck cabin 101 design.

In the shown example, a volume 6 is defined below plane 13 defined by the sliding rails 5 and by a distance D between the pair of sliding rails 5 in a direction transverse to a sliding of the pair of sliding rails 5, such that the spiral spring 7 is fully provided underneath the support frame 4, thereby lowering the height of seat of chair 2 in the cabin 101 of the truck 100. In a conventional truck 100, having a conventional cabin 101 and a conventional truck chair 2, the volume 6 is very limited due to the design of the cabin 101 and the truck chair 2 design. In the shown example, the truck chair 2 is a commonly available truck chair that can be mounted to the sliding rails 5 either directly, e.g. a suitable support frame 3 is already present in the truck chair 2, or indirectly, e.g. by providing a support frame 3 to which the chair can be mounted. In case the sliding rails 5 are provided at an angle relative to the road 102 the truck 100 is located on, it may be advantageous to provide support 12 such that seat of the truck chair 2 is provided substantially parallel to the road 102.

The truck chair assembly 1 further comprises a locking mechanism 10 arranged to releasably lock the truck chair 2 along the sliding direction X on the sliding rails 5. The locking mechanism 10 locks the chair 2, such that when the person sitting on the chair 2 does not want to move the chair 2, it does not move. In the shown example, the locking mechanism 10 may be pulled, thereby unlocking the chair 2 to slide along the sliding direction X. Once the chair 2 is in a preferred position, the locking mechanism 10 can be released, and it locks the chair 2 again on the sliding rails 5 via spring action.

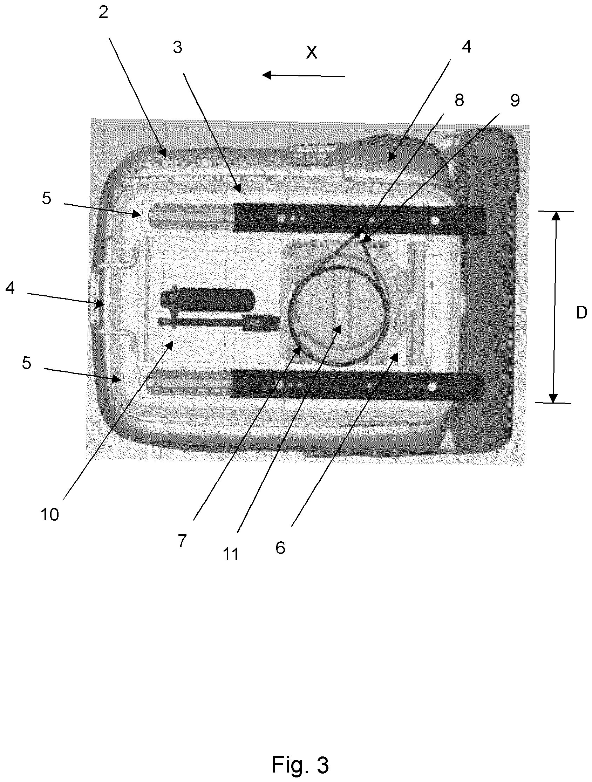

Referring to Fig. 3 an example of the truck chair assembly 1 is depicted. A spiral spring 7 provided below a surface 13 defined by the support frame 3 and connected to the support frame 3 on one end 8 and to the sliding rails 5 on the other end 9 such that the truck chair 2 has a biased position on the sliding rails 5 and at least partially counteracting a downward force F acting on the truck chair 2, see Figs. 2A and 2B. In the shown example, the spiral spring 7 is connected to the support frame 3 and the sliding rails 5 on one side of the truck chair 2, however it will be clear that it will be possible to connect the spiral spring 7 anywhere to the support frame 3 and anywhere to the sliding rails 5. Spiral spring 7 acts as a compensating mechanism when the locking mechanism 10 is unlocked. If a person sitting on the chair wishes to adjust the position of the truck chair 2, for example move the truck chair 2 closer a steering wheel provided in the cabin 101, they may unlock the chair 2 on the sliding rails. However, due to the angled position of the sliding rails 5, the chair 2 may move forward due to downward force F. Spiral spring 7 is provided such that it provides sufficient resistance, i.e. a force in the opposite direction, to moving forward that the person adjusting the chair is not unduly physically stressed. However, it will be clear to the person skilled in the art that the spring 7 will not be too strong, such that it will be difficult for the person sitting on the chair 2 to adjust said chair 2.

The spiral spring 7 in the example is a wound-up type of spiral spring 7, in which the spiral shape is in a plane. In the shown example, the plane of the spiral spring 7 is provided parallel a surface of the seat of the truck chair 2. It will however be clear that spiral spring 7 may be provided such that the plane of the spiral spring 7 is provided differently, e.g. parallel to the cabin floor 102 or at an angle relative to the cabin floor 102, as long as the spiral spring 7 fits below the surface 13 defined by the support frame 3, and preferably in the volume 6.

In an example, if the truck chair 2 is moved in the sliding direction X by applying a force on the truck chair 2, the spiral spring 7 unwinds. Unwinding causes deformation of the spring 7 in a plane transverse to its height, but not in the height direction itself. In other words, the spiral spring stays relatively flat and stays within the volume 6 below the support frame 3 and the cabin floor 102.

The adjustable truck chair assembly 1 further comprises lifting mechanism 10 arranged to adjust the distance between the support frame 3 and the cabin floor 103 in a direction perpendicular to the cabin floor 103 and a seat suspension 11. In the shown example, the seat suspension is a central seat air bellow carrier 11. The lifting mechanism 10 may be used to adjust the height of chair 2 in the height direction Y, independently of moving the truck chair 2 in the sliding direction X. Both the lifting mechanism 10 and the central seat air bellow carrier 11 are provided below a surface 13 defined by the support frame 3, preferably in the volume 6, thereby further limiting the available space for a compensating mechanism. In the shown example, the compensating mechanism, being the spiral spring 7 is provided around the central seat air bellow carrier 11.

Many variations will be apparent to the skilled person in the art. Such variations are understood to be comprised within the scope of the invention as defined in the appended claims.

## Claims

1. Truck comprising an adjustable truck chair assembly comprising:
- a truck chair provided on a support frame, wherein the support frame is slideably connected to a pair of parallel sliding rails such that the support frame can slide over the sliding rails in a sliding direction, wherein the sliding rails extend in a plane at an angle relative to a cabin floor of the truck;
- a spiral spring at least partially provided below the plane defined by the sliding rails and connected to the support frame on one end and to the sliding rails on the other end such that the truck chair has a biased position on the sliding rails and at least partially counteracting a downward force acting on the truck chair,
- wherein the spiral spring is wound-up around an axis transverse to the plane and is arranged to be substantially unwound in the plane when the truck chair is moved out of the biased position on the sliding rails.

2. Truck according to claim 1, wherein the spiral spring is provided between the pair of sliding rails.

3. Truck according to any of the preceding claims, wherein the truck chair assembly further comprises a locking mechanism arranged to releasably lock the truck chair along the sliding direction.

4. Truck according to any of the preceding claims, wherein the adjustable truck chair assembly further comprises lifting mechanism arranged to adjust the distance between the support frame and the cabin floor in a direction perpendicular to the cabin floor, wherein the lifting mechanism is provided below the surface defined by the support frame.

5. Truck according to any of the preceding claims, wherein the adjustable truck chair assembly further comprises a seat suspension, preferably a central seat air bellow carrier, provided below the surface defined by the support frame and wherein the spiral spring is provided around the central seat air bellow carrier.
